# FASCICULE DE BREVET EUROPEEN

(11) **EP 2 026 687 B1**
(45) Date de publication et mention de la délivrance du brevet: **18.03.2015**
(21) Numéro de dépôt: 07788882.4
(22) Date de dépôt: 13.06.2007
(51) Int. Cl.: A47J 43/07, A21B 7/00

(54) **RECIPIENT DE TRAITEMENT THERMIQUE D'ALIMENTS**
BEHÄLTER ZUR WÄRMEBEHANDLUNG VON LEBENSMITTELN
CONTAINER FOR THERMAL TREATMENT OF FOOD

(30) Priorité: 15.06.2006 FR 0605345
(43) Date de publication de la demande: 25.02.2009
(73) Titulaire: SEB S.A., 69130 Ecully (FR)
(72) Inventeur: REYES, Lionel, F-21120 Echevannes (FR)
(74) Mandataire: Kiehl, Hubert
(86) Numéro de dépôt international: PCT/FR2007/000977
(87) Numéro de publication internationale: WO 2007/144506

(56) Documents cités:
- DE-B- 1 063 777
- FR-A3- 2 863 146

## Description

L'invention concerne le domaine des appareils de traitement thermique des aliments par la chaleur ou par le froid, et plus précisément une cuve de préparation et de transformation physique des aliments dans ledit appareil.

De tels appareils, dont la machine à pain est un exemple récent très connu, sont capables de mélanger les différents ingrédients, puis de réaliser leur transformation physique par traitement thermique.

Dans le cas de la machine à pain, l'appareil permet de pétrir, lever et cuire différentes sortes de pâtes de manière à réaliser une grande variété de pains, avec une cuisson définie selon les goûts et l'addition de composés tels que des céréales, du fromage, des lardons, des raisins secs, des noix, etc... Des pains spéciaux peuvent ainsi être réalisés à volonté avec une telle machine.

La machine à pain permet la fabrication de différentes catégories de pains, dans différents formats, mais est aussi employée pour la confection de pâtes à tartes, de pâte à pizza, de pâte pour les raviolis et les nouilles, de cakes ou des pains sucrés. Cet appareil d'emploi varié, qui permet même de réaliser des préparations liquides ou pâteuses telles que des compotes et des confitures, connaît un succès croissant.

La machine à pain comporte généralement de multiples fonctionnalités comme la possibilité de programmer la fabrication du pain et d'en différer la cuisson, le maintien au chaud après la cuisson, etc...

L'appareil dispose habituellement d'un hublot facilitant le suivi de la préparation et d'outils agencés dans une cuve de préparation. Les outils, animés en rotation par le moteur de la machine, permettent les différentes opérations mécaniques de mélange des ingrédients et de pétrissage de la pâte.

L'utilisation depuis plusieurs années de la machine à pain a montré la nécessité d'employer des outils amovibles, usuellement des pales, et de prévoir la possibilité d'extraction de la cuve utilisée pour le pétrissage et la cuisson, notamment pour des raisons de nettoyage de ladite cuve.

Il a ainsi été décrit divers appareils comportant ces particularités, par exemple les documents US 4,870,896 et US 5,694,832 qui montrent une cuve extractible disposée sur le bloc moteur au moyen d'ergots s'enclenchant dans une contrepartie pour le verrouillage.

Le document US 5,463,936 présente une cuve de machine intégralement détachable d'une autre nature.

Tous ces appareils qui disposent d'une cuve extractible présentent un inconvénient majeur pour le démoulage du pain en fin de cuisson.

En effet, lorsque le cycle de cuisson est terminé, le pain adhère fortement sur le fond et, dans une moindre mesure, sur les parois latérales de la cuve. Ce problème a pu être expérimenté par de nombreux utilisateurs et se traduit très souvent par une rupture du pain lors de l'opération de démoulage, notamment dans le fond de la cuve, et un aspect inesthétique de la réalisation, voire un endommagement des parois ou du revêtement des parois lorsqu'un objet pointu est utilisé pour démouler le pain.

Ce problème constaté au stade ultime de la confection de l'aliment est très frustrant pour les utilisateurs de la machine à pain.

Malgré des tentatives pour réaliser des parois de cuves anti-adhérentes ou des pales escamotables, les machines à pain actuelles n'amènent pas de solution vis-à-vis de cette difficulté de démoulage et la dégradation d'aspect résultante.

L'invention a donc pour objectif de résoudre cette principale difficulté en proposant une cuve de préparation et de transformation physique d'aliments pour un appareil électroménager, ladite cuve étant amovible de l'appareil et comportant au moins deux parties délimitant le volume de la cuve à l'intérieur de laquelle est disposé au moins un outil de brassage, caractérisée en ce que les parties sont mobiles les unes par rapport aux autres, et en ce que la cuve dispose d'au moins un moyen de verrouillage et de déverrouillage des différentes parties entre elles.

En proposant ainsi une cuve composée de parties et notamment de parois mobiles les unes par rapport aux autres, on facilite l'opération finale de démoulage du produit après transformation physique, puisqu'il est ainsi plus facile d'escamoter certaines parties de la cuve et de jouer par petits mouvements relatifs entre les parties, une fois déverrouillées, pour extraire le produit de la cuve.

Selon une mise en oeuvre préférée de l'invention, la cuve comporte :
- une partie appelée « contenant », formée d'une ou de plusieurs parois verticales délimitant l'espace utile de la cuve,
- une partie appelée « socle », comportant une base supportant des axes de pales, lesdites pales étant destinées au mélange des constituants,
la cuve comportant également au moins un moyen de verrouillage et de déverrouillage du contenant avec le socle.

Cette mise en oeuvre, par la possibilité de séparer les parois latérales du fond de la cuve, renforce la fiabilité de démoulage du produit après transformation physique, et donc la satisfaction de l'utilisateur de l'appareil d'obtenir un produit esthétiquement correct.

La transformation physique peut être une cuisson, telle qu'elle a lieu dans une machine à pain, ou bien une congélation, par exemple dans un appareil servant à la réalisation de glaces, telle une sorbetière.

Dans le cas d'une machine à pain, il est connu que le produit, une fois cuit, attache davantage au fond de la cuve que sur les bords. Il est ainsi relativement aisé de séparer la ou les paroi(s) latérale(s). Le fond de la cuve est alors très accessible.

Avantageusement, le contenant est amovible du socle, facilitant un peu plus le démoulage du produit transformé, mais facilitant également le nettoyage de la cuve.

Avantageusement, au moins un moyen de verrouillage et de déverrouillage du contenant avec le socle est disposé à l'extérieur de la cuve et actionnable manuellement.

La facilité de montage et démontage de la cuve est également un aspect positif notable pour un emploi aisé de la machine.

Selon une mise en oeuvre de l'invention, au moins un moyen de verrouillage et déverrouillage est constitué par au moins deux éléments :
- un dispositif d'enclenchement
- un moyen mobile de fermeture,
le dispositif d'enclenchement et le moyen mobile de fermeture étant chacun porté par une partie différente, soit le contenant, soit le socle. Une telle simplicité de conception du dispositif de verrouillage - déverrouillage de la cuve permet de fabriquer un appareil aux performances améliorées dans des conditions tout à fait économiques.

D'autres caractéristiques et avantages de l'invention se dégageront de la description qui va suivre en regard des dessins annexés qui ne sont donnés qu'à titre d'exemples non limitatifs.
La figure 1 est une vue éclatée de la cuve démontable d'une machine à pain selon l'invention montrant les composants essentiels.
La figure 2 illustre la cuve démontable, en position verrouillée, selon une vue en perspective.
La figure 3 montre la cuve démontable, en position verrouillée, selon une vue de côté.
La figure 4 illustre la cuve démontable, en position verrouillée, selon une vue en coupe selon l'axe B-B.
La figure 5 montre le système de verrouillage de la cuve démontable en position verrouillée.
La figure 6 montre le système de verrouillage de la cuve démontable en position déverrouillée.

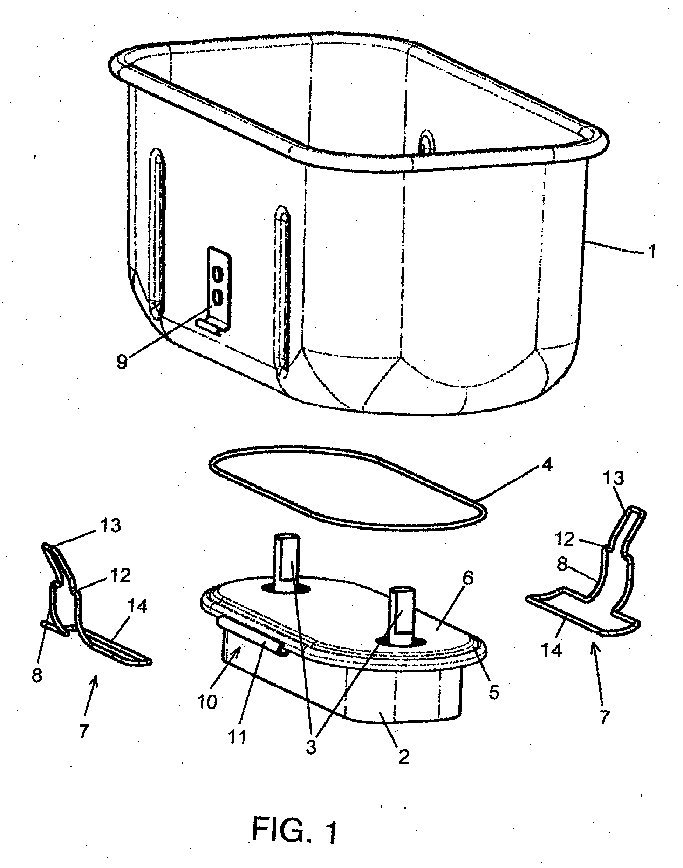

Comme cela est illustré dans la vue éclatée de la figure 1 la cuve démontable selon l'invention comporte les éléments essentiels suivants :
- un « contenant » 1 comportant plusieurs parois verticales délimitant l'espace utile de la cuve. Cet espace intérieur utile reçoit les différents ingrédients utilisés pour la fabrication du pain ou de la préparation à cuire.
- un socle 2 supportant les axes 3 des pales, lesdites pales permettant le mélange des constituants et le pétrissage de la pâte.

Le socle 2 peut comporter le bloc moteur pour l'entraînement des pales ou un mécanisme de transmission de l'entraînement lorsque ledit bloc moteur est déporté.

La cuve de préparation et de cuisson permettant le mélange des différents ingrédients dont certains sont liquides, une amélioration de cette conception en plusieurs parties de la cuve consiste à disposer un joint d'étanchéité 4, de préférence torique, à l'interface entre le contenant 1 et le socle 2, sur le pourtour du socle.

Il est toutefois à noter qu'un tel joint n'est pas forcément indispensable lorsque la réalisation de l'agencement des deux parties de la cuve l'une sur l'autre comporte un minimum de jeu.

Selon la forme de réalisation présentée, le contenant 1 s'appuie sur un plateau 6 formant la partie supérieure du socle 2. Ce plateau 6 est en contact direct avec la pâte puis le pain.

Avantageusement, il est prévu une lèvre 5 sur la périphérie du plateau 6 pour faciliter le positionnement et le maintien du joint d'étanchéité 4 lors du verrouillage du contenant 1 sur le socle 2 et la mise en pression dudit joint.

Selon l'invention, la cuve comporte au moins un moyen de verrouillage et déverrouillage du contenant 1 avec le socle 2, moyen disposé à l'extérieur de la cuve et actionnable manuellement. Plus précisément il est illustré deux loquets 7 placés sur chaque côté de la cuve destinés à verrouiller le contenant et le socle ensemble. Dans cet exemple spécifique les loquets 7 sont formés par un fil métallique 8 épais.

Selon l'exemple présenté, la cuve illustrée sur la figure 1 est de forme parallélépipédique avec une hauteur sensiblement égale à la largeur et une longueur suffisante pour permettre l'installation sur le socle de deux pales pour le mélange des ingrédients.

Dans une telle configuration, fréquemment rencontrée dans les appareils de type machine à pain, la surface de base nécessairement importante pour la cuisson du pain, permettant la cuisson de quantité importante de pâte, pose un véritable problème après cuisson, lors du démoulage, notamment lorsque la cuve est réalisée en une seule pièce. En effet, le pain accroche sur les parois verticales ainsi que sur les zones de liaison entre parois. La réalisation en deux parties de la cuve évite ainsi le recours à divers objets pointus souvent utilisés dans ces situations pour décoller le pain des parois de la cuve, mais qui souvent endommagent le revêtement de la cuve.

La cuve peut également être conçue de forme sensiblement cubique ou cylindrique à base circulaire, si une seule pale doit être placée sur le socle, sans sortir du cadre de l'invention.

De préférence la cuve est conformée dans un métal autorisé pour la réalisation de préparations alimentaires et d'épaisseur suffisante pour garantir l'absence de déformations le long de la vie de la machine. Afin d'améliorer la résistance mécanique et de réduire la dilatation de cette pièce lors de la cuisson de l'aliment, il pourra être prévu des renforts et des moyens additionnels divers, connus par ailleurs.

Les parois de la cuve sont préférentiellement réalisées à partir d'une tôle métallique emboutie de manière à former un récipient dont le fond est ensuite découpé. La découpe étant très précisément réalisée à la dimension du plateau du socle de manière à ce que lorsque le joint d'étanchéité 4 est positionné dans la lèvre 5 le moyen de verrouillage mette en pression ledit joint d'étanchéité situé à l'interface entre les deux pièces et que la paroi soit hermétiquement fixée avec le socle.

L'ensemble contenant - socle forme ainsi un récipient pouvant recevoir les différents ingrédients des préparations, et notamment des produits liquides ou pâteux, sans risque de fuite. Cet aspect est particulièrement intéressant lorsque l'appareil est une machine à pain utilisée pour la réalisation de compote ou de confiture.

Le contenant 1 et le socle 2 sont maintenus ensemble grâce à au moins un moyen de verrouillage - déverrouillage. De préférence selon l'invention ledit moyen de verrouillage - déverrouillage de la cuve démontable est disposé sur la partie extérieure de la cuve et actionnable manuellement avec un effort limité, réalisable par tous les utilisateurs.

Selon l'invention au moins un moyen de verrouillage et déverrouillage est constitué par au moins deux éléments :
- un dispositif d'enclenchement
- un moyen mobile de fermeture

Le dispositif d'enclenchement et le moyen mobile de fermeture étant chacun porté par une partie différente, soit le contenant 1, soit le socle 2.

La figure 1 illustre un exemple de réalisation dans lequel le dispositif d'enclenchement est constitué par un crochet 9 fixé sur le contenant 1, plus exactement sensiblement au milieu et dans la partie inférieure du grand côté des parois verticales, et le moyen mobile de fermeture est un ensemble constitué par un loquet 7 articulé dans une charnière 10 fixée sous le grand côté du plateau 6.

La charnière 10 est constituée par un tube ouvert 11 destiné à recevoir la partie linéaire 14 du fil métallique 8 constitutif du loquet 7.

De préférence le loquet 7 comporte des moyens élastiques permettant un emboîtement avec le crochet 9. Dans l'exemple de réalisation illustré sur la figure 1 le fil métallique 8 est élastiquement déformable de manière à assurer le verrouillage de la partie supérieure du loquet, au niveau du rétrécissement 12, dans le crochet.

Le loquet 7 est conformé pour s'ajuster sur la forme correspondante du contenant 1 et s'emboîter dans le dispositif d'enclenchement, soit dans cet exemple le crochet 9, au niveau du rétrécissement 12.

Avantageusement le loquet 7 comporte une portion rectangulaire formant une manette 13 utilisable pour manoeuvrer le loquet entre les positions verrouillées et déverrouillées. Ladite manette est recourbée vers l'extérieur pour s'éloigner de la paroi et faciliter sa préhension par l'utilisateur.

Dans l'exemple de réalisation illustré sur les différentes figures, le dispositif d'enclenchement est porté par le contenant 1 et le moyen mobile de fermeture par le socle 2. Toutefois, sans sortir du cadre de l'invention, il peut être envisagé d'inverser les positionnements et de placer le moyen mobile de fermeture sur le contenant et le dispositif d'enclenchement sur le socle.

Par ailleurs des systèmes de verrouillage - déverrouillage autres que celui envisagé peuvent être imaginés et décrits à titre de variantes, sans sortir du cadre de l'invention.

Toutefois, le nombre de système de verrouillage - déverrouillage est avantageusement de deux. Ces systèmes sont placés sur les grands côtés et sensiblement au milieu du contenant et du socle, mais rien n'interdit de placer davantage de systèmes, ou même éventuellement un seul, en modifiant la conformation du socle de manière à former une structure d'appui rigide pour la partie basse du contenant.

Selon l'invention les moyens de verrouillage - déverrouillage sont résistants à la chaleur de façon à n'être pas déformés au cours de la cuisson de l'aliment et ne pas entraîner de perte d'étanchéité entre le contenant et le socle.

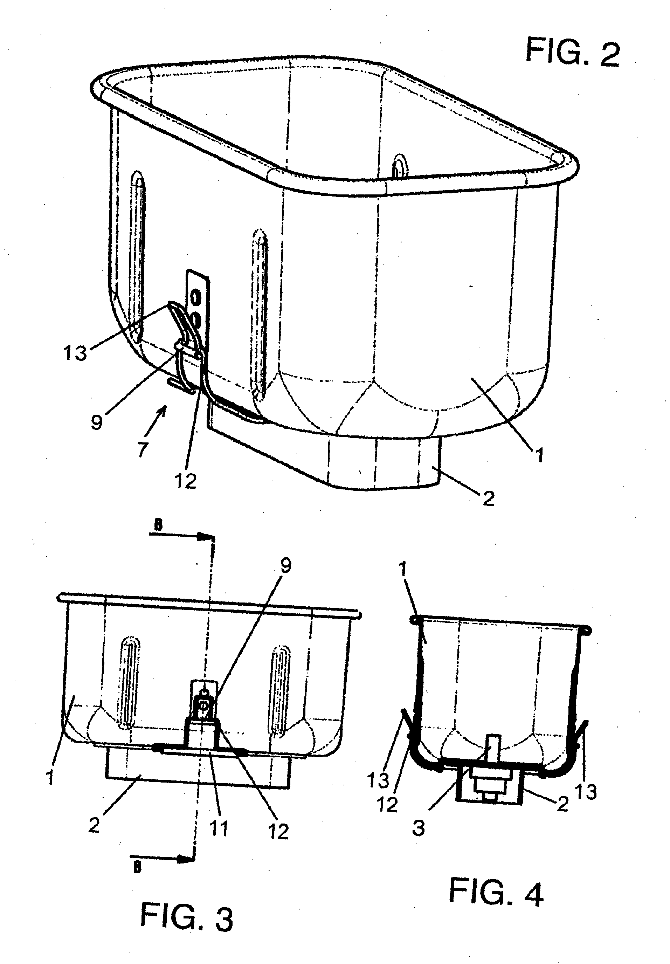

Les figures 2, 3 et 4 montrent la cuve démontable selon différents points de vue dans la configuration selon laquelle le contenant 1 est verrouillé sur le socle 2.

Les différentes vues montrent la forme du loquet 7, le crochet 9, lé tube ouvert 11 formant charnière pour le fil métallique constitutif du loquet, la manette 13 pour actionner le loquet et la forme générale du loquet conformée pour s'adapter à la forme arrondie du bas du contenant 1.

Le positionnement de deux loquets 7 au milieu des grands côtés des parois verticales du contenant 1 et du socle permet un maintien efficace de la cuve lors du pétrissage de la pâte.

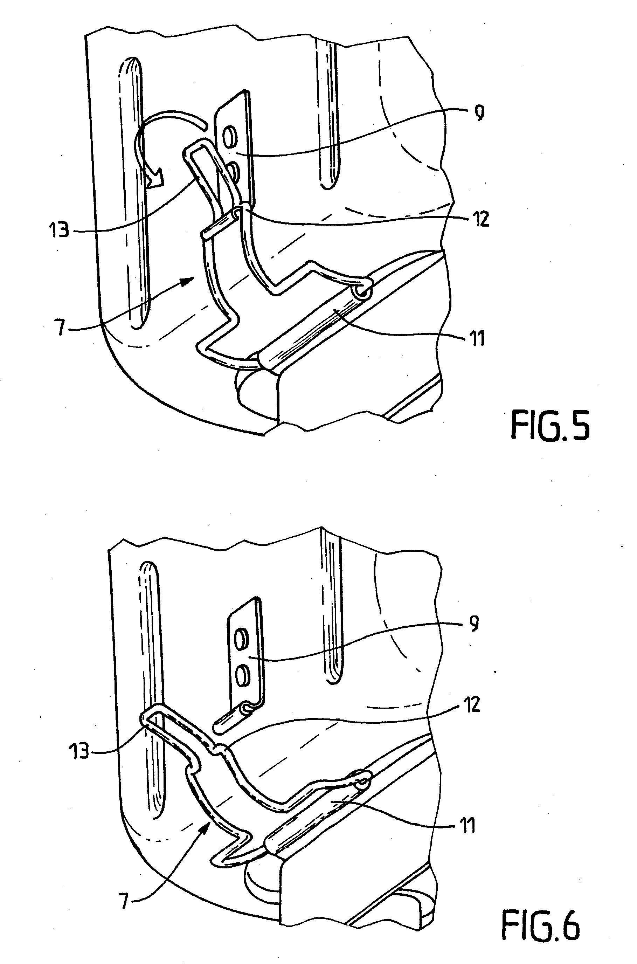

Les figures 5 et 6 explicitent le mécanisme d'emboîtement élastique du loquet, notamment au niveau de la partie comportant le rétrécissement 12, sur le crochet 9. Ces figures illustrent l'opération de déverrouillage lors du basculement vers le bas du loquet 7, par appui sur la manette 13 dans le sens de la flèche.

Le loquet 7, dans une opération de verrouillage ou de déverrouillage, pivote autour de l'axe du tube ouvert 11.

Le fonctionnement de la cuve démontable de machine à pain est très simple. L'utilisateur installe le contenant sur le socle, lequel comporte déjà le joint d'étanchéité positionné à sa périphérie dans la lèvre, les loquets de chaque côté de la cuve sont pivotés et enclenchés sur les crochets pour verrouiller les deux parties entre elles.

La cuve est placée dans la machine et l'utilisateur prépare sa pâte dans le récipient étanche formé.

La pâte est pétrie puis la cuisson est réalisée. En fin de cycle, après avoir retiré la cuve de la machine, le loquet est déverrouillé, le socle est désolidarisé du contenant, il est alors très facile d'extraire le pain en séparant le contenant du socle et en exerçant une poussée sur la base inférieure du pain.

De cette manière l'utilisateur est certain de pouvoir, à chaque fois, retirer le pain de la cuve sans en abîmer l'aspect. L'ensemble contenant et socle peut ensuite être nettoyé facilement et remonté pour une nouvelle utilisation.

Une variante de l'invention consiste à positionner l'appui du contenant non plus sur le plateau, dans la partie supérieure du socle, mais à la base dudit socle sur un plateau inférieur. Dans cette variante le joint d'étanchéité pourrait être configuré différemment et les moyens de verrouillage - déverrouillage être prévus autrement.

Il est également concevable de placer une rainure profonde sur le pourtour du plateau de manière à ce que le contenant soit immobilisé dans la position souhaitée par emboîtement et prévoir, par exemple, des moyens à vis dans une partie de débordement du plateau, pour verrouiller l'ensemble.

Il peut être prévu aussi des moyens complémentaires pour l'emboîtement entre le contenant et le socle, éventuellement des guides ou des cales, pour éviter tout mouvement de la paroi lors du pétrissage et le verrouillage hermétique des deux pièces ensemble.

Il existe en pratique de très nombreux moyens pour fixer hermétiquement une colonne sur un support plan ou sur une autre colonne, ces moyens de verrouillage, aussi variés soient-ils, peuvent être utilisés pour maintenir la paroi faisant office de colonne avec le socle et son plateau. La colonne en question pouvant être à section circulaire, rectangulaire, carrée, etc...

Le démoulage du pain est grandement facilité par la séparation opérée entre le fond du récipient de cuisson et le contenant. Bien évidemment, des systèmes complémentaires permettant de détacher ou d'articuler des panneaux constitutifs du contenant sont encore plus favorables pour le détachement du pain.

Par ailleurs, plusieurs variantes de cuves démontables sont possibles sans sortir du cadre de l'invention. Il peut notamment être envisagé de scinder la cuve en plusieurs parties selon des configurations différentes de celle illustrée, par exemple par un plan d'assemblage vertical, oblique, ou plus complexe selon la forme de la cuve. Il peut également être envisagé que certaines parois du contenant soient également mobiles, soit en étant elles aussi démontables, en étant constituées de panneaux emboîtés les uns sur les autres, soit en étant montées en rotation par des charnières.

Il peut aussi être imaginé une paroi comportant des panneaux mobiles articulés de différentes manières et verrouillés entre eux et avec le socle pour faciliter davantage le démoulage du pain après cuisson.

De nombreuses machines à pain prévoient la possibilité d'extraction de la cuve de l'appareil. Toutefois, il peut être envisagé, dans le cadre de l'invention, différentes variantes dans lesquelles la cuve démontable pourrait n'être pas extractible en totalité, par exemple le socle pourrait rester en place dans la machine à pain et seul le contenant pourrait être démonté.

Bien entendu, l'invention n'est pas limitée aux modes de réalisation décrits et représentés à titre d'exemples, mais elle comprend aussi tous les équivalents techniques ainsi que leurs combinaisons.

En particulier, la présente invention peut s'appliquer à d'autres appareils électroménagers de transformation physique et comportant un élément de brassage, telles les machines de préparation de glaces, communément appelées sorbetières.

On retrouve, dans de tels appareils, des problèmes techniques de démoulage des produits élaborés, la prise en masse par le froid de la préparation dans la cuve associée gênant considérablement le démoulage. La cuve peut être amovible ou non de l'appareil. Ce problème de démoulage peut même s'avérer plus important que dans le cas d'une machine à pain, la préparation solidifiée pouvant présenter moins de cohérence qu'un pain.

## Revendications

1. Machine à pain comprenant une cuve de préparation et de transformation physique d'aliments , ladite cuve étant amovible de la machine et comportant au moins deux parties (1, 2) délimitant le volume de la cuve à l'intérieur de laquelle est disposé au moins un outil de brassage, **caractérisée en ce que** les parties (1, 2) sont mobiles les unes par rapport aux autres, et **en ce que** la cuve dispose d'au moins un moyen de verrouillage et de déverrouillage des différentes parties (1, 2) entre elles.

2. Machine à pain comprenant une cuve de préparation et de transformation physique d'aliments selon la revendication 1, **caractérisée en ce que** la cuve comporte :
- une partie appelée « contenant » (1), formée d'une ou de plusieurs parois verticales délimitant l'espace utile de la cuve,
- une partie appelée « socle » (2), comportant une base supportant des axes de pales (3), lesdites pales étant destinées au mélange des constituants,
la cuve comportant également au moins un moyen de verrouillage et de déverrouillage du contenant (1) avec le socle (2).

3. Machine à pain comprenant une cuve de préparation et de transformation physique d'aliments selon la revendication 2, **caractérisée en ce que** le contenant (1) est amovible du socle (2).

4. Machine à pain comprenant une cuve de préparation et de transformation physique d'aliments selon l'une des revendications 2 ou 3, dans laquelle un joint d'étanchéité (4) est disposé à l'interface entre le contenant (1) et le socle (2).

5. Machine à pain comprenant une cuve de préparation et de transformation physique d'aliments selon la revendication 4 dans laquelle le contenant (1) s'appuie sur un plateau (6) formant la partie supérieure du socle (2).

6. Machine à pain comprenant une cuve de préparation et de transformation physique d'aliments selon la revendication 5 dans laquelle il est prévu une lèvre (5) sur la périphérie du plateau (6) pour faciliter le positionnement et le maintien du joint d'étanchéité (4) lors du verrouillage du contenant (1) sur le socle (2).

7. Machine à pain comprenant une cuve de préparation et de transformation physique d'aliments selon la revendication 2 dans laquelle au moins un moyen de verrouillage et déverrouillage du contenant (1) avec le socle (2) est disposé à l'extérieur de la cuve et actionnable manuellement.

8. Machine à pain comprenant une cuve de préparation et de transformation physique d'aliments selon la revendication 7 dans laquelle au moins un moyen de verrouillage et déverrouillage est constitué par au moins deux éléments :
- un dispositif d'enclenchement
- un moyen mobile de fermeture,
le dispositif d'enclenchement et le moyen mobile de fermeture étant chacun porté par une partie différente, soit le contenant (1), soit le socle (2).

9. Machine à pain comprenant une cuve de préparation et de transformation physique d'aliments selon la revendication 8 dans laquelle le dispositif d'enclenchement est un crochet (9).

10. Machine à pain comprenant une cuve de préparation et de transformation physique d'aliments selon la revendication 8 dans laquelle le moyen mobile de fermeture est constitué par un loquet (7) articulé dans une charnière (10), de préférence le loquet (7) comporte des moyens élastiques permettant un emboîtement avec le crochet (9).

11. Machine à pain comprenant une cuve de préparation et de transformation physique d'aliments selon l'une quelconque des revendications 8 à 10 dans laquelle le dispositif d'enclenchement est fixé sur le contenant (1) et le moyen mobile de fermeture est constitué par un loquet (7) fabriqué avec un fil métallique (8) traversant un tube ouvert (11), lequel tube ouvert (11) formant une charnière (10) positionnée sur le socle (2), le loquet (7) étant conformé pour s'ajuster sur la forme correspondante du contenant (1) et s'emboîter dans le dispositif d'enclenchement.

12. Machine à pain comprenant une cuve de préparation et de transformation physique d'aliments selon l'une quelconque des revendications 2 à 11 dans laquelle la cuve est de forme parallélépipédique, les moyens de verrouillage et déverrouillage étant au nombre de deux et placés sur les grands côtés et sensiblement au milieu du contenant (1) et du socle (2).

13. Machine à pain comprenant une cuve de préparation et de transformation physique d'aliments selon l'une quelconque des revendications 2 à 12, **caractérisé en ce que** le contenant (1) comporte plusieurs parois verticales montées en rotation par des charnières.

14. Machine à pain comprenant une cuve de préparation et de transformation physique d'aliments selon l'une des revendications précédentes, **caractérisée en ce qu'**elle est de forme sensiblement parallélépipédique.

## Patentansprüche

1. Brotbackautomat mit einem Behälter zur Zubereitung und physikalischen Umwandlung von Lebensmitteln, wobei der genannte Behälter von dem Automaten abnehmbar ist und aus zumindest zwei Teilen (1, 2) besteht, die das Volumen des Behälters begrenzen, in dessen Innern mindestens ein Rührwerkzeug angeordnet ist, **dadurch gekennzeichnet, dass** die Teile (1, 2) zueinander beweglich sind und dass der Behälter über zumindest eine Vorrichtung zum Ver- und Entriegeln der verschiedenen Teile (1, 2) miteinander verfügt.

2. Brotbackautomat mit einem Behälter zur Zubereitung und physikalischen Umwandlung von Lebensmitteln nach Anspruch 1, **dadurch gekennzeichnet, dass** der Behälter Folgendes umfasst:
- einen "Backform" genannten Teil (1), der aus einem oder mehreren vertikalen Wänden gebildet wird, die den nutzbaren Raum des Behälters begrenzen,
- einen "Sockel" genannten Teil (2), der eine Basis umfasst, die Schaufelachsen (3) trägt, wobei die genannten Schaufeln für das Mischen der Zutaten bestimmt sind und wobei der Behälter außerdem mindestens eine Vorrichtung zum Ver- und Entriegeln der Backform (1) mit dem Sockel (2) umfasst.

3. Brotbackautomat mit einem Behälter zur Zubereitung und physikalischen Umwandlung von Lebensmitteln nach Anspruch 2, **dadurch gekennzeichnet, dass** die Backform (1) vom Sockel (2) abnehmbar ist.

4. Brotbackautomat mit einem Behälter zur Zubereitung und physikalischen Umwandlung von Lebensmitteln nach einem der Ansprüche 2 oder 3, bei dem eine Dichtung (4) an der Grenzfläche zwischen der Backform (1) und dem Sockel (2) angeordnet ist.

5. Brotbackautomat mit einem Behälter zur Zubereitung und physikalischen Umwandlung von Lebensmitteln nach Anspruch 4, bei dem sich die Backform (1) auf einer Platte (6) abstützt, die den oberen Teil des Sockels (2) bildet.

6. Brotbackautomat mit einem Behälter zur Zubereitung und physikalischen Umwandlung von Lebensmitteln nach Anspruch 5, bei dem eine Lippe (5) am Umfang der Platte (6) vorgesehen ist, die die Positionierung und Rückhaltung der Dichtung (4) bei der Verriegelung der Backform (1) auf dem Sockel (2) erleichtert.

7. Brotbackautomat mit einem Behälter zur Zubereitung und physikalischen Umwandlung von Lebensmitteln nach Anspruch 2, bei dem mindestens eine Vorrichtung zum Ver- und Entriegeln der Backform (1) mit dem Sockel (2) an der Außenseite des Behälters angeordnet ist und sich manuell betätigen lässt.

8. Brotbackautomat mit einem Behälter zur Zubereitung und physikalischen Umwandlung von Lebensmitteln nach Anspruch 7, bei dem mindestens eine Vorrichtung zum Ver- und Entriegeln aus zumindest zwei Elementen besteht:
- einem Rastelement
- einem beweglichen Verschlusselement, wobei das Rastelement und das bewegliche Verschlusselement jeweils von einem anderen Teil getragen werden, entweder der Backform (1) oder dem Sockel (2).

9. Brotbackautomat mit einem Behälter zur Zubereitung und physikalischen Umwandlung von Lebensmitteln nach Anspruch 8, bei dem das Rastelement ein Haken (9) ist.

10. Brotbackautomat mit einem Behälter zur Zubereitung und physikalischen Umwandlung von Lebensmitteln nach Anspruch 8, bei dem das bewegliche Verschlusselement aus einem Riegel (7) besteht, der gelenkig in einem Scharnier (10) sitzt, wobei der Riegel (7) vorzugsweise elastische Mittel umfasst, die mit dem Haken (9) in Eingriff gebracht werden können.

11. Brotbackautomat mit einem Behälter zur Zubereitung und physikalischen Umwandlung von Lebensmitteln nach einem der Ansprüche 8 bis 10, bei dem das Rastelement an der Backform (1) befestigt ist und das bewegliche Verschlusselement aus einem Riegel (7) besteht, der aus einem Metalldraht (8) hergestellt wird, der durch ein offenes Rohr (11) geführt wird, wobei das offene Rohr (11) ein Scharnier (10) bildet, das am Sockel (2) angeordnet ist und wobei der Riegel (7) so ausgelegt ist, dass er sich an die entsprechende Form der Backform (1) anpasst und in das Rastelement eingreift.

12. Brotbackautomat mit einem Behälter zur Zubereitung und physikalischen Umwandlung von Lebensmitteln nach einem der Ansprüche 2 bis 11, bei dem der Behälter quaderförmig ist, wobei die Vorrichtungen zum Ver- und Entriegeln zweifach vorhanden und an den Längsseiten und im Wesentlichen in der Mitte der Backform (1) und des Sockels (2) angeordnet sind.

13. Brotbackautomat mit einem Behälter zur Zubereitung und physikalischen Umwandlung von Lebensmitteln nach einem der Ansprüche 2 bis 12, **dadurch gekennzeichnet, dass** die Backform (1) mehrere vertikale Wände umfasst, die durch Scharniere drehend gelagert sind.

14. Brotbackautomat mit einem Behälter zur Zubereitung und physikalischen Umwandlung von Lebensmitteln nach einem der vorhergehenden Ansprüche, **dadurch gekennzeichnet, dass** er im Wesentlichen quaderförmig ist.

## Claims

1. Bread machine comprising a bowl for the preparation and physical conversion of foods, said bowl being removable from the machine and having at least two parts (1, 2) bounding the volume of the bowl inside which is arranged at least one mixing tool, **characterised in that** the parts (1, 2) are movable with respect to each other, and **in that** the bowl has at least one means of locking and unlocking the various parts (1, 2) together.

2. Bread machine comprising a bowl for the preparation and physical conversion of foods according to claim 1, **characterised in that** the bowl comprises:
- a "container" part (1), formed from one or more vertical walls bounding the useful space of the bowl,
- a "base" part (2), comprising a base supporting blade shafts (3), said blades being designed to mix the ingredients,
the bowl also comprising at least one means of locking and unlocking the container (1) to the base (2).

3. Bread machine comprising a bowl for the preparation and physical conversion of foods according to claim 2, **characterised in that** the container (1) can be removed from the base (2).

4. Bread machine comprising a bowl for the preparation and physical conversion of foods according to claim 2 or 3, wherein a seal (4) is fitted at the interface between the container (1) and the base (2).

5. Bread machine comprising a bowl for the preparation and physical conversion of foods according to claim 4, wherein the container (1) rests on a tray (6) forming the upper part of the base (2).

6. Bread machine comprising a bowl for the preparation and physical conversion of foods according to claim 5, wherein a lip (5) is provided on the periphery of the tray (6) to position and hold the seal (4) more easily when locking the container (1) on the base (2).

7. Bread machine comprising a bowl for the preparation and physical conversion of foods according to claim 2, wherein at least one means of locking and unlocking the container (1) to the base (2) is arranged outside the bowl and can be actuated manually.

8. Bread machine comprising a bowl for the preparation and physical conversion of foods according to claim 7, wherein at least one means of locking and unlocking consists of at least two elements:
- an engagement device
- a mobile closure means,
the engagement device and the mobile closure means each being carried by a different part, either the container (1) or the base (2).

9. Bread machine comprising a bowl for the preparation and physical conversion of foods according to claim 8, wherein the engagement device is a hook (9).

10. Bread machine comprising a bowl for the preparation and physical conversion of foods according to claim 8, wherein the mobile closure means consists of a latch (7) pivoting in a hinge (10), the latch (7) preferably comprising spring means in order to engage with the hook (9).

11. Bread machine comprising a bowl for the preparation and physical conversion of foods according to any of claims 8 to 10, wherein the engagement device is fastened to the container (1) and the mobile closure means consists of a latch (7) manufactured with a metal wire (8) crossing an open tube (11), the open tube (11) forming a hinge (10) positioned on the base (2), the latch (7) being shaped to adjust to the corresponding shape of the container (1) and insert in the engagement device.

12. Bread machine comprising a bowl for the preparation and physical conversion of foods according to any of claims 2 to 11, wherein the bowl is in the shape of a parallelepiped, there being two locking and unlocking means placed on the long sides and substantially in the middle of the container (1) and the base (2).

13. Bread machine comprising a bowl for the preparation and physical conversion of foods according to any of claims 2 to 12, **characterised in that** the container (1) comprises several vertical walls mounted in rotation by hinges.

14. Bread machine comprising a bowl for the preparation and physical conversion of foods according to any of the preceding claims, **characterised in that** its shape is substantially that of a parallelepiped.
